Europäisches Patentamt

European Patent Office

Office européen des brevets

(11) Publication number: **0 127 374**
A2

## EUROPEAN PATENT APPLICATION

(21) Application number: 84303273.1

(22) Date of filing: 15.05.84

(51) Int. Cl.³: **G 02 F 1/133**
**G 02 F 1/137, G 02 F 1/17**

(30) Priority: 27.05.83 JP 93584/83

(43) Date of publication of application:
05.12.84 Bulletin 84/49

(84) Designated Contracting States:
DE FR GB

(71) Applicant: SEIKO INSTRUMENTS & ELECTRONICS LTD
31-1, Kameido 6-chome
Koto-ku Tokyo(JP)

(72) Inventor: Kamamori, Hitoshi
c/o Kabushiki Kaisha Daini Seikosha
6-31-1 Kameido Koto-ku Tokyo(JP)

(72) Inventor: Tsunoda, Yukiyoshi
c/o Kabushiki Kaisha Daini Seikosha
6-31-1 Kameido Koto-ku Tokyo(JP)

(72) Inventor: Suginoya, Mitsuru
c/o Kabushiki Kaisha Daini Seikosha
6-31-1 Kameido Koto-ku Tokyo(JP)

(72) Inventor: Sano, Yutaka
c/o Kabushiki Kaisha Daini Seikosha
6-31-1 Kameido Koto-ku Tokyo(JP)

(72) Inventor: Terada, Yumiko
c/o Kabushiki Kaisha Daini Seikosha
6-31-1 Kameido Koto-ku Tokyo(JP)

(74) Representative: Caro, William Egerton et al,
J. MILLER & CO. Lincoln House 296-302 High Holborn
London WC1V 7JH(GB)

(54) Colour liquid crystal display device.

(57) A colour liquid crystal display device comprises a first display cell (A) which has an optical shutter effect disposed on a second twisted nematic liquid crystal display cell (B) which has a double layered multi-colour polarizing plate (8) in which the absorption axes of respective layers having different absorption wavelength regions are perpendicular to each other, picture elements of the first display cell (A) and the second display cell (B) being arranged so as to correspond to each other.

FIG. 3

## COLOUR LIQUID CRYSTAL DISPLAY DEVICE

This invention relates to colour liquid crystal display devices.

Display devices employing liquid crystal compositions have the advantages of low power consumption, reduced thickness and long life, and are used in a very wide range of applications including digital timepieces, pocket calculators, measuring instruments as well as, in recent years, instruments for automotive applications, liquid crystal televisions, etc. Accompanying such a wide range of application, demand has increased year after year for colour display liquid crystal display devices and a variety of such have already been devised. From the standpoint of practical application, however, these have both merits and demerits.

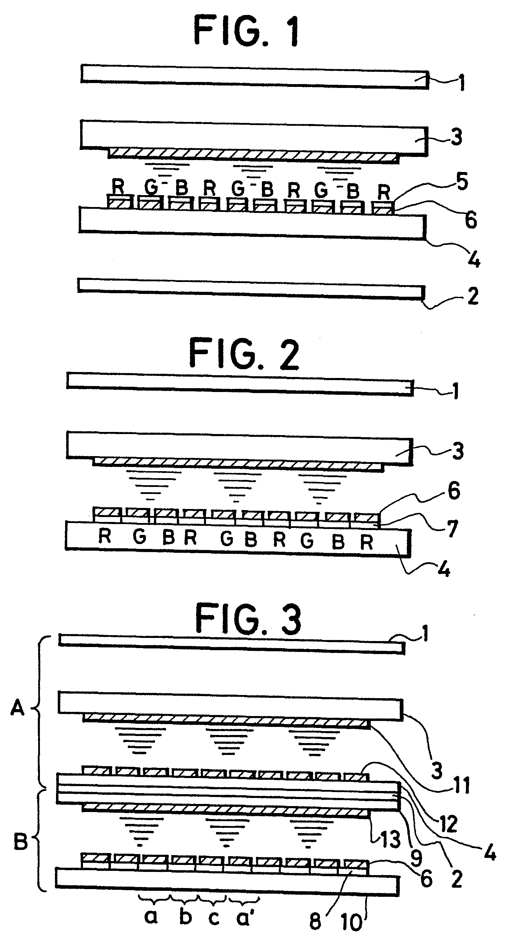

Two typical examples of colour liquid crystal display devices will be described. First, is exemplified a colour liquid crystal display device which employs colour filters and a twisted nematic liquid crystal display cell (hereinafter referred to as a TN liquid crystal display cell). Figure 1 is a schematic section through such a colour liquid crystal display device in which a pair of polarizing plates 1,2 are so arranged that their polarizing axes are oriented in the same direction, and a TN liquid crystal display cell is disposed therebetween, the display cell being obtained by twist-orienting a nematic liquid crystal composition. Colour filters 5 of red (R), green (G) and blue (B), which are the three primary colours for light, are provided on transparent electrodes 6 disposed on one substrate 4 of the display cell. The display cell has a transparent substrate 3 on which there is a common electrode, the liquid crystal composition being disposed between the electrodes 3,4.

When no voltage is applied, light is blocked by the display cell and the display appears black. When a voltage is applied, however, the filter to which the voltage is applied displays its colour. If the filters 5 have a fine pattern, the colour liquid crystal display device theoretically works in the same manner as a colour cathode ray tube, which makes it possible to realise a full colour spectrum by additive colour mixing. However, in this colour liquid crystal display device light is absorbed by the filters 5 even when the display is white and so it has a very small transmission factor. For example, when red is to be displayed, the other picture elements of green (G) and blue (B) appear to be black. With a reflection type colour liquid crystal display device, therefore, the display produced has a dark reddish colour. Therefore, a satisfactory colour display is not achieved unless the colour liquid crystal display device is constructed to be of the transmission type which uses a very bright back light. This cancels the advantage of low power consumption which is one of the great merits of liquid crystal display devices, and greatly restricts the range of application.

Figure 2 is a cross-section of another conventional colour liquid crystal display device which employs a multi-colour polarizing plate and a TN liquid crystal display cell. A multi-colour polarizing plate consists of a plurality of colour polarizing elements arranged within one polarizing plane. For instance, the multi-colour polarizing plate is red (R), green (G) and blue (B) polarizing elements arranged in strips 7. Transparent electrodes 6 are also provided so as to correspond to the strips on the multi-colour polarizing plate. If the polarizing axes of the polarizing plate 1 and the multi-colour polarizing plate are at right angles to each other, light is permitted to pass through the display cell when no voltage is applied, and a white display is produced. When a voltage is applied, on the other hand, light is absorbed by the multi-colour polarizing plate at the portion to which the voltage is applied, and the colour of this portion is displayed. If the strips on the multi-colour polarizing plate have a small pitch, additive colour mixing can be realised. For instance, a yellow display can be produced by applying voltages to the red (R) and green (G) polarizing elements. However, when, for example, a red display is produced, the green and blue picture elements will produce a white display. Therefore, a dark reddish display is not produced even with a reflection type colour liquid crystal display device employing a multi-colour polarizing plate. In this case, however, a display of a pale reddish colour with a small saturation is produced. That is, although the display with a higher transmission factor than that of the colour liquid crystal display device of Figure 1 is produced, it is difficult to obtain a sufficiently high contrast with the colour liquid crystal display device of Figure 2.

The present invention seeks to provide a colour liquid crystal display device eliminating the necessity of back lighting that is traditionally required by colour liquid crystal display devices employing filters to compensate for the low transmission factor, as well as improving contrast which is not sufficient with colour liquid crystal display devices employing multi-colour polarizing plates.

According to the present invention there is a provided a colour liquid crystal display device characterised by comprising: a first display cell which has an optical shutter effect disposed on a second twisted nematic liquid crystal display cell which has a double layered multi-colour polarizing plate in which the absorption axes of respective layers having different absorption wavelength regions are perpendicular to each other, picture elements of said first display cell and said second display cell being arranged so as to correspond to each other.

Said first display cell may be a twisted nematic type liquid crystal display cell sandwiched between a pair of polarizing plates. Alternatively, said first display cell may be a guest-host liquid crystal display cell containing black dichroic colouring matter.

Another possibility is that said first display cell utilises an electrochromic phenomenon.

The invention is illustrated, merely by way of example, in the accompanying drawings, in which:-

Figures 1 and 2 are schematic sections through conventional colour liquid crystal display devices;

Figures 3, 5 and 6 are schematic sections through embodiments of colour liquid crystal display devices according to the present invention; and

Figure 4 is a schematic section through a multi-colour polarizing plate of a colour liquid crystal display device according to the present invention.

Throughout the drawings like parts have been designated by the same reference numerals.

Figure 3 is a schematic section of one embodiment of a colour liquid crystal display device according to the present invention. A TN liquid crystal display cell A is sandwiched between a pair of polarizing plates 1,2 and a TN liquid crystal display cell B which has a double layered multi-colour polarizing plate 8 is disposed adjacent thereto. Absorption axes of each layer having different absorption wavelength regions are aligned at right angles. Transparent electrodes 11,12 of the display cell A and transparent electrodes 13,6 of the display cell B have picture elements respectively corresponding to each other.

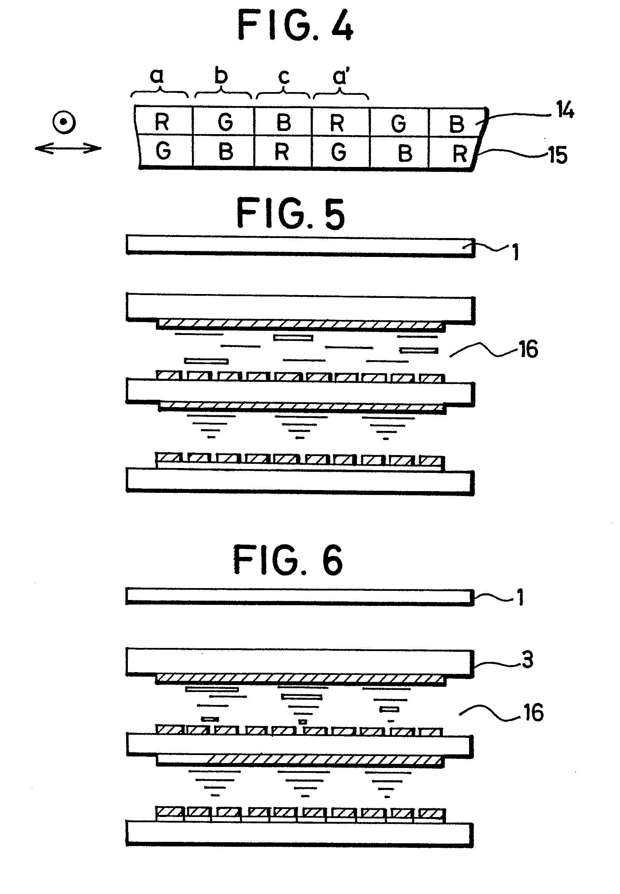

The multi-colour polarizing plate 8 in which the absorption axes of the two layers have different absorption wavelength regions are perpendicular to each other, can be easily obtained by, for example, laminating together two multi-colour wavelength plate layers so that their absorption axes are at right angles as shown in Figure 4. In detail, a multi-colour polarizing plate layer 14 with absorption axes for red (R), green (G) and blue (B) aligned in a direction perpendicular to the surface of the paper is laminated onto a multi-colour polarizing plate layer 15 with absorption axes for red (R), green (G) and blue (B) aligned in a direction parallel to the surface of the paper, in such a manner that the same colours do not overlap. If light which is linearly polarized in the direction of the surface of the paper is incident upon the multi-colour polarizing plate, a portion a in Figure 4 produces green, a portion b produces blue, and a portion c produces red. If light which is linearly polarized in the direction perpendicular to the surface of the paper is incident, the colour of portion a becomes red, the colour of portion b becomes green, and the colour of portion c becomes blue.

Reference is now made to Figure 3 in which the polarizing plate 1 has an absorption axis parallel to the surface of the paper, the polarizing plate 2 has an absorption axes in the direction perpendicular to the surface of the paper, and the multi-colour polarizing plate 8 of Figure 4 is used. In this case, when no voltage is applied to either the display cell A or the display cell B, portion a produces red, portion b produces green, and portion c produces blue, and accordingly white is produced due to additive colour mixing (the portions a, b and c of Figure 3 correspond to the portion a, b, and c of Figure 4). The principle up to this point is the same as that of the colour liquid crystal display device employing colour filters as shown in Figure 1.

The production of a red display and a yellow display will now be described. The red display is produced by applying a voltage to portion b of the display cell A and to portion c of the display cell B. Portion b produces black since light is absorbed by the display cell A, and portion c produces red which is the colour of portion c of the multi-colour polarizing plate layer 15 of Figure 4, since the display cell B loses its optical activity when a voltage is applied thereto. That is, a red display is produced by two out of three picture elements, with twice the light transmission quantity of the red display that is produced by one out of three picture elements (in which the green and blue portions produce black) of the colour liquid crystal display device of Figure 1 employing colour filters.

The yellow display is obtained by applying voltages to portion c and portion a' of the display cell B. That is, portions a, b produce the colours of the multi-colour polarizing plate layer 14 and portions c and a' produce the colours of the multi-colour polarizing plate layer 15, so that a yellow colour display is produced by four out of four picture elements, by the colour mixture of red and green. Therefore, there is achieved light transmission quantity which is 1.5 times that obtained by the yellow display by two out of three picture elements (in which the blue portion produces black) of the colour liquid crystal display device of Figure 1 employing colour filters. High transmission factors are also obtained with all the other displays of colour. Further, since there is no white picture element, no colour mixture with white takes place, and a sufficiently high contrast is obtained with the display of any colour.

Figures 5 and 6 are schematic sections of display in which a guest-host liquid crystal display cell (hereinafter referred to as a GH liquid crystal display cell) is used as the first display cell, that is the display cell A with the optical shutter effect. In either case, use is made of a P-type GH nematic liquid crystal composition 16 to which black dichroic colouring matter has been added. In the embodiment of Figure 5, the liquid crystal orientation is parallel, and in the embodiment of Figure 6 it is twisted. The absorption axes of the polarizing plate 1 of Figure 5 is at right angles to the direction of orientation of the GH liquid crystal composition, and the absorption axes of the polarizing plate of Figure 6 is at right angles to the direction of orientation of the GH liquid crystal composition on the transparent substrate 3.

The colour liquid crystal display devices of Figures 5 and 6 can be driven in the same manner as the colour liquid crystal display device of Figure 3 in which the TN liquid crystal display cell is used as the optical shutter, to obtain the same quality of display. Although the contrast is reduced to some extent compared with the TN liquid crystal display cell, the GH liquid crystal display cell helps reduce the dependency on the angle of viewing, and makes it possible to provide a colour liquid crystal display device which produces a good display. Good results can also be obtained, even when the GH liquid crystal composition is orientated perpendicularly by using an N-type nematic liquid crystal composition, or even when a GH liquid crystal composition of the cholesteric-nematic phase transition type is used.

According to the present invention as described above, high contrast can be obtained without the need of back lighting that is required by the conventional colour liquid crystal display devices using colour filters to compensate for a low transmission factor. The present invention may also eliminate the defect of low contrast of the conventional colour liquid crystal display device of Figure 2 which employs a multi-colour polarizing plate and which produces a reflection type of colour liquid crystal display device that maintains a high transmission factor. In the former, the number of effective picture elements (picture elements which do not produce black) is increased to produce the colour display. In the latter display, colour mixtures with white picture elements are prevented. Thus, the present invention realises a colour liquid crystal display device which features a high transmission factor and a high contrast.

In the embodiment of Figure 3, the polarizing plate 2 is sandwiched between the substrates 4,9 of the display cells A,B. It is, however, also possible to place transparent electrodes 12,13 directly onto the polarizing plate 2, or to adhere a polarizing plate onto a transparent substrate and then form transparent electrodes thereon. It is further possible to provide the polarizing plate 1 on the liquid crystal composition side of the transparent substrate 3. If the thicknesses of the polarizing plate and the multi-colour polarizing plate are reduced, a polarizing film can be formed on the transparent electrodes.

According to the present invention, furthermore, the first display cell, the display cell A, with the optical shutter effect may be any display cell, provided it utilizes an electrochroic phenomenon or it may be a PLZT provided it exhibits an optical shutter effect.

## CLAIMS

1. A colour liquid crystal display device characterised by comprising: a first display cell (A) which has an optical shutter effect disposed on a second twisted nematic liquid crystal display cell (B) which has a double layered multi-colour polarizing plate (8) in which the absorption axes of respective layers having different absorption wavelength regions are perpendicular to each other, picture elements of said first display cell (A) and said second display cell (B) being arranged so as to correspond to each other.

2. A colour liquid crystal display device as claimed in claim 1 characterised in that said first display cell (A) is a twisted nematic type liquid crystal display cell sandwiched between a pair of polarizing plates (1,2).

3. A colour liquid crystal display device as claimed in claim 1 characterised in that said first display cell (A) is a guest-host liquid crystal display cell containing black dichroic colouring matter.

4. A colour liquid crystal display device as claimed in claim 1 characterised in that said first display cell (A) utilises an electrochromic phenomenon.

# FIG. 1

1

3

R G B R G B R G B R    5
6
4

2

# FIG. 2

1

3

6
7

R G B R G B R G B R    4

# FIG. 3

1

A

3
11

12

B

13

4

2

9
6

a b c a'    8 10

# FIG. 4

| a | | b | | c | | a' | | | |
|---|---|---|---|---|---|---|---|---|---|
| R | G | B | R | G | B |
| G | B | R | G | B | R |

14
15

# FIG. 5

1

16

# FIG. 6

1

3

16